# EUROPÄISCHE PATENTSCHRIFT

(11) **EP 1 825 309 B1**
(45) Veröffentlichungstag und Bekanntmachung des Hinweises auf die Patenterteilung: **10.10.2012**
(21) Anmeldenummer: 05802702.0
(22) Anmeldetag: 20.10.2005
(51) Int. Cl.: G02B 6/42, G02B 6/38

(54) **MEDIZINISCHES LASERSYSTEM MIT EINER KUPPLUNGSVORRICHTUNG FÜR EINEN LICHTLEITER**
MEDICAL LASER SYSTEM COMPRISING A COUPLING FOR A LIGHT GUIDE
SYSTÈME DE LASER MÉDICALE COMPRENANT UN DISPOSITIF DE COUPLAGE POUR UNE GUIDE DE LUMIÈRE

(30) Priorität: 15.12.2004 DE 102004060761
(43) Veröffentlichungstag der Anmeldung: 29.08.2007
(73) Patentinhaber: Thyzel, Reinhardt, 90562 Heroldsberg (DE)
(72) Erfinder: Thyzel, Reinhardt, 90562 Heroldsberg (DE)
(74) Vertreter: Schröer, Gernot H.
(86) Internationale Anmeldenummer: PCT/EP2005/011291
(87) Internationale Veröffentlichungsnummer: WO 2006/066647

(56) Entgegenhaltungen:
- EP-A- 0 690 324
- EP-A- 0 898 186
- US-A- 4 487 474
- US-A- 5 239 602
- US-A- 5 843 073

## Beschreibung

Die Erfindung betrifft eine Kupplungsvorrichtung zum Anschließen eines Lichtleiters.

Es sind optische Kupplungsvorrichtungen, insbesondere Steckverbindungen oder Schraubverbindungen, bekannt, um einen Lichtleiter, beispielsweise eine Lichtleitfaser, an andere optische Komponenten oder weitere Lichtleiter optisch anzuschließen. Um eine sichere Übertragung des Lichts zu gewährleisten, müssen der Lichtleiter und die weitere optische Komponente oder die beiden Lichtleiter bezüglich der Lichtausbreitungsrichtung oder der optischen Achsen in der Kupplungsvorrichtung besonders genau aneinander gefügt oder zueinander ausgerichtet werden, damit das Licht oder das Lichtsignal möglichst vollständig übertragen wird. Außerdem müssen die empfindlichen Lichtfasern, besonders an ihren besonders empfindlichen Enden, vor einer mechanischen Beschädigung geschützt werden.

Eine Anwendungsmöglichkeit von Lichtleitern ist das Übertragen von Licht, insbesondere Laserlicht, zur Bearbeitung von Werkstoffen oder zur medizinischen Behandlung von Menschen oder Tieren, insbesondere in der Augenheilkunde (Ophthalmologie), beispielsweise bei der Explantation der natürlichen Augenlinse bei Kataraktoperationen im Rahmen der Phakoemulsifikation, bei der mittels Laserlicht erzeugter Schockwellen die Linse emulsifiziert und abgesaugt wird (Photolyse), oder bei Operationen der Hornhaut (cornea) beispielsweise zur Behandlung von Myopie.

Eine andere Anwendung ist die Übertragung von Informationen über Lichtsignale durch Lichtleiter in der Messtechnik, Kommunikationstechnik und Datentechnik.

Aus der EP 0 898 186 A1 ist eine Steckverbindung zum zentrierten Anschließen einer lichtleitenden Faser oder zum zentrierten Koppeln zweier lichtleitenden Fasern bekannt mit einem Stecker und einer Buchse mit einer Ausnehmung, in die der Stecker eingreift. Die lichtleitende Faser ist durch die Buchse geführt und endet mit einem Faserende in einer Bohrung des Steckers, die in Richtung zur Buchse trichterförmig aufgeweitet. Die Lichtleitfaser ist zum Schutz vor mechanischer Beschädigung in einem Rohr starr gehalten, das die Faser innerhalb der Bohrung des Steckers bis zum Faserende umgibt. Die Buchse und der Stecker mit dem trichterförmigen Abschnitt dieser bekannten Steckverbindung sind aus Kunststoff, vorzugsweise als Spritzgussteile, hergestellt.

In einer aus der Praxis bekannten ähnlich wie die Ausführungsform gemäß EP 0 898 186 A1 aufgebauten weiteren Steckverbindung ist die Lichtleitfaser nicht von einem Rohr umgeben, sondern ihr Ende ragt frei in den trichterförmigen Abschnitt des Steckers. Der Stecker mit der trichterförmigen Innenfläche ist aus Metall, nämlich Edelstahl, durch Drehen angefertigt und meist auch nachpoliert. Beim Zusammenstecken von Stecker und Buchse dient der Trichter als Führungs- und Zentrierhilfe für den Lichtleiter.

Es ist Aufgabe der Erfindung, eine neue optische Kupplungsvorrichtung für Lichtleiter bereitzustellen.

Diese Aufgabe wird durch den Gegenstand gemäß Patentanspruch 1 gelöst. Vorteilhafte Ausgestaltungen und Weiterbildungen gemäß der Erfindung ergeben sich aus den vom Anspruch 1 abhängigen Ansprüchen.

Die Kupplungsvorrichtung (optischer Koppler) zum Anschließen eines Lichtleiters an wenigstens einen weiteren Lichtleiter und/oder an wenigstens ein optisches Bauelement, umfasst ein erstes Kupplungselement mit einem ersten Durchgang zum Aufnehmen eines Endbereiches des Lichtleiters und ein zweites Kupplungselement mit einem zweiten Durchgang zum Aufnehmen eines Abschnitts des Lichtleiters, wobei das erste Kupplungselement und das zweite Kupplungselement lösbar zusammenfügbar oder, in einem gekuppelten Zustand, lösbar zusammengefügt sind und der erste Durchgang und der zweite Durchgang im gekuppelten oder zusammengefügten Zustand einen gemeinsamen Durchgang bilden (oder: mit ihren Mündungsbereichen einander zugewandt sind oder ineinander übergehen) und/oder eine gemeinsame Längsachse aufweisen oder umschließen. Der erste Durchgang des ersten Kupplungselements weist einen trichterförmigen Abschnitt (oder: trichterförmigen Eingangsbereich, Einführtrichter) auf, der sich im gekuppelten Zustand zum zweiten Kupplungselement hin verbreitert. Es ist nun das erste Kupplungselement zumindest im Bereich des trichterförmigen Abschnitts wenigstens an dessen Innenfläche aus keramischem Material (oder: keramischem Werkstoff, Keramik) gebildet oder hergestellt.

Die Erfindung geht aus von der überraschenden Beobachtung, dass trotz der Flexibilität der Faser und der Trichterform der Bohrung im Stecker es in der Praxis in einigen Fällen zu einer Beschädigung der Lichtleitfaser an deren empfindlichem Ende kommt, wenn dieses Faserende an der Trichteroberfläche entlang gleitet. Daraufhin vom Erfinder angestellte Untersuchungen ergaben, dass der Trichter des Steckers in den bekannten Kupplungsvorrichtungen an der Innenseite dennoch im Vergleich zum Faserquerschnitt vergleichsweise große Oberflächenrauhigkeiten und Unebenheiten aufweist und zwar trotz der Bearbeitung der Oberflächen. In dem Trichter aus Edelstahl entstehen durch das Drehen Riefen und selbst das Kunststoff-Spritzgussteil hat aufgrund seiner Materialeigenschaften stets eine relativ hohe Oberflächenrauhigkeit. Die Riefen und die raue Oberfläche im Trichter können dazu führen, dass die Lichtglasfasern splittern und/oder abbrechen und/oder an ihren Enden beschädigt werden. Dadurch wird die Lichtleitfaser unbrauchbar.

Zur Lösung oder Verminderung dieses Problems ist nun gemäß der Erfindung vorgesehen, dass das erste Kupplungselement zumindest im Bereich des trichterförmigen Abschnitts des ersten Durchgangs zumindest an der inneren Oberfläche aus einem keramischen Material besteht.

Teile oder Schichten aus einem keramischen Material können, selbst ohne Nachbehandlung durch Polieren oder ähnliche Maßnahmen, mit einer besonders glatten Oberfläche hergestellt werden. Wenn der Endbereich des Lichtleiters auf die innere Oberfläche des Trichters trifft, kann der Lichtleiter nun entlang dieser inneren Oberfläche gleiten, ohne an einer Vertiefung oder Erhebung an der Oberfläche hängen zu bleiben. Dadurch wird die Gefahr wesentlich vermindert, dass der Lichtleiter beim Zusammenfügen der Kupplungselemente beschädigt wird. Der trichterförmige Abschnitt des ersten Durchganges kann nun problemlos zur Positionierung oder Führung, insbesondere Zentrierung, des Lichtleiterendes beim Einführen (oder: Einfädeln) in den ersten Durchgang des ersten Kupplungselements eingesetzt werden oder vorgesehen sein. und im Allgemeinen das Einführen des Lichtleiters erleichtert.

In einer besonders vorteilhaften Ausführungsform weist der erste Durchgang des ersten Kupplungselements einen an den trichterförmigen Abschnitt sich anschließenden zweiten Abschnitt auf, der im gekuppelten Zustand an der vom zweiten Durchgang abgewandten Seite des trichterförmigen Abschnitts angeordnet ist, und vorzugsweise das freie Ende und einen unmittelbar anschließenden ersten Teil des Endabschnitts des Lichtleiters aufnimmt und derart justiert, dass eine optische Achse des Lichtleiters an dessen freiem Ende im Wesentlichen entlang einer Längsachse dieses zweiten Abschnitts ausgerichtet ist. Zweckmäßigerweise der Innendurchmesser dieses zweiten Abschnitts des ersten Durchgangs im Wesentlichen konstant und an den zumindest im Endabschnitt im Wesentlichen konstanten Außendurchmesser des Lichtleiters angepasst, damit der Lichtleiter genau eingepasst oder formschlüssig sitzt.

Die Kupplungsvorrichtung gemäß der Erfindung ist im Allgemeinen zum Anschließen des Lichtleiters an wenigstens einen weiteren Lichtleiter und/oder an wenigstens ein optisches Bauelement, insbesondere ein lichtemittierendes Bauelement, z.B. ein Laser oder eine Laserdiode oder eine LED, oder ein lichtdetektierendes Bauelement, insbesondere ein photoelektrisches Bauelement wie ein Phototransistor oder eine Photodiode, oder ein lichtapplizierendes Instrument, z.B. ein Handinstrument für die Applikation des (Laser)-Lichts, vorgesehen, wobei der weitere Lichtleiter und/oder das optische Bauelement an den oder in dem ersten Durchgang des ersten Kupplungselements anschließbar oder angeschlossen sind oder ist, insbesondere an oder in den zweiten Abschnitt des ersten Durchgangs an der vom trichterförmigen Abschnitt abgewandten Seite. Der weitere Lichtleiter ist vorzugsweise im angeschlossenen Zustand mit seinem freien Ende und einem anschließenden Endabschnitt in dem zweiten Abschnitt des ersten Durchgangs aufgenommen und derart justiert, dass eine optische Achse des Lichtleiters an dessen freiem Ende im Wesentlichen entlang einer Längsachse dieses zweiten Abschnitts ausgerichtet ist und die freien Enden der beiden Lichtleiter einander gegenüber liegen. Der erste Durchgang kann dann zur Erleichterung auch der Einführung und Zentrierung des weiteren Lichtleiters vorteilhafterweise einen dritten Abschnitt aufweisen, der sich trichterförmig von dem zweiten Abschnitt weg aufweitet.

Ferner kann wenigstens ein drittes Kupplungselement zur Aufnahme des weiteren Lichtleiters und/oder des wenigstens einen optischen Bauelements vorgesehen sein, wobei das dritte Kupplungselement mit dem ersten Kupplungselement lösbar zusammenfügbar oder in einem gekuppelten Zustand lösbar zusammengefügt ist. Dieses dritte Kupplungselement weist nun vorzugsweise einen dritten Durchgang auf zur Aufnahme und/oder Fixierung eines auf den Endabschnitt folgenden Zwischenabschnitts des weiteren Lichtleiters. Insbesondere bilden auch der erste Durchgang des ersten Kupplungselements und der dritte Durchgang des dritten Kupplungselements im gekuppelten Zustand einen gemeinsamen Durchgang und/oder weisen auf oder umschließen eine gemeinsame Längsachse.

Es ist besonders vorteilhaft, wenn die gemeinsame Längsachse von erstem Durchgang und zweitem oder drittem Durchgang eine Längsmittelachse oder zentrale Längsachse ist, so dass dann eine axiale Anordnung des Lichtleiters in der Kupplungsvorrichtung im Wesentlichen ohne Biegen des Lichtleiters ermöglicht wird.

Das erste Kupplungselement kann einstückig oder einteilig oder auch alternativ aus zwei oder mehreren vorgefertigten und aneinander oder miteinander befestigten oder verbundenen Teilen aufgebaut sein, wobei zumindest ein Teil mit dem trichterförmigen Abschnitt des ersten Durchgangs zumindest an dessen Innenfläche aus dem keramischen Material hergestellt oder gebildet ist. Bei einer einteiligen Ausführung ist der Montageaufwand geringer. Bei einem mehrteiligen Aufbau dagegen hat der trichterförmige Abschnitt die gewünschte glatte Oberfläche, während die Materialien für die übrigen Teile des ersten Kupplungselements entsprechend den Anforderungen gezielt ausgewählt werden können.

Das erste Kupplungselement kann vollständig oder auch nur teilweise in einem den ersten Durchgang oder zumindest den trichterförmigen Abschnitt des ersten Durchgangs aufweisenden Teil des ersten Kupplungselements aus keramischem Material, insbesondere demselben keramischen Material, hergestellt oder gebildet sein. In einer vorteilhaften Ausführungsform ist der gesamte erste Durchgang zumindest an seiner Innenfläche aus keramischem Material gebildet oder erzeugt. Diese Ausführungsform ist insbesondere in Kombination mit der Ausführungsform vorteilhaft, bei der der erste Durchgang einen an den trichterförmigen Abschnitt sich anschließenden weiteren Abschnitt zur Aufnahme des Lichtleiterendes aufweist und somit das Lichtleiterende beim Einführen auch eventuell an der Innenfläche dieses weiteren Abschnitts entlang gleitet oder schleift.

Bei Ausbildung des gesamten Kupplungselements oder dessen Teils aus keramischem Vollmaterial wird vorzugsweise ein Urformverfahren angewandt, das die bei Herstellen einer Keramik typischen Herstellschritte umfasst, insbesondere
- die Formgebung eines Rohlings aus den feinteiligen Ausgangsstoffen oder Rohstoffen,
- den keramischen Brand oder das Sintern des im Allgemeinen vorher getrockneten Rohlings
- ggf Nachbehandlung

Als Formgebungsverfahren kommen vor allem Gießverfahren mit fließfähiger Ausgangsmasse, vorzugsweise Spritzguss, aber auch Pulververdichtungsverfahren oder -pressverfahren mit pulvrigen Ausgangsstoffen in Betracht.

Alternativ kann das erste Kupplungselement auch ganz oder in dem genannten Teil mit dem ersten Durchgang oder dessen trichterförmigen Abschnitt aus einem Grundkörper und einer Oberflächenschicht aus dem keramischen Material gebildet sein. Der Grundkörper kann dabei aus einem Metall, insbesondere Aluminium oder einer Aluminiumlegierung oder einem Stahl, bestehen. Zwischen Grundkörper und Oberflächenschicht aus keramischem Material kann zusätzlich eine Zwischenschicht, insbesondere zur Haftvermittlung und/oder eine Chrom-Nickel-Schicht, vorgesehen sein. Das Aufbringen der Keramik-Oberflächenschicht kann durch Spritzen, insbesondere thermisches Spritzen oder Plasmaspritzen, erfolgen.

Das keramische Material der Kupplungsvorrichtung wird zweckmäßig im Hinblick auf ein gutes Gleitverhalten oder einen niedrigen Gleitwiderstand oder Gleitreibungskoeffizienten des Lichtleiters auf der Keramikoberfläche des ersten Durchgangs, insbesondere im trichterförmigen Abschnitt, ausgewählt oder optimiert.

Insbesondere wird beim keramischen Material auf eine ausreichend niedrige Oberflächenrauhigkeit oder eine ausreichend glatte Oberfläche geachtet. Die Oberflächenrauhigkeit, insbesondere der arithmetische Mittelwert Ra, wird vorzugsweise klein gegenüber den Abmessungen des Lichtleiterquerschnitts, die typischerweise im Bereich von 100 µm bis 1000 µm, vorzugsweise 200 µm bis 800 µm, liegen, gewählt, beispielsweise einen Faktor von mindestens 50, vorzugsweise mindestens 100, kleiner als der Lichtleiterdurchmesser, und/oder liegt insbesondere unterhalb eines oder höchstens bei einem der folgenden Werte: 3 µm, 2,5 µm, 2 µm, 1,5 µm, 1 µm, 0,5 µm.

Oberflächenrauhigkeiten von 1,5 µm bis 3 µm lassen sich als mit "Standard"-Oberflächen von urgeformten Keramik-Formkörpern oder Keramikschichten, die durch Standardbeschichtungsverfahren wie thermisches Spritzen oder Plasmaspritzen hergestellt wurden, ohne weitere Nachbearbeitung oder Nachpolieren erreichen. Für niedrigere Oberflächenrauhigkeiten kann die Oberfläche zusätzlich poliert oder auf andere Weise feinnachbearbeitet werden. Hiermit lassen sich sogar Oberflächenrauhigkeiten von 0,3 µm und darunter einstellen. Im Vergleich dazu hat die Stahloberfläche beim Stand der Technik auch bei Oberflächenfeinbearbeitung eine Rauhigkeit von mindestens 20 µm.

Das keramische Material umfasst (enthält oder besteht aus) vorzugsweise wenigstens einem oxidkeramischen Werkstoff, insbesondere einem oder mehreren aus der Aluminiumoxid, Titandioxid, Chromoxid, Magnesiumoxid, Berylliumoxid und Zirkondioxid umfassenden Gruppe von oxidkeramischen Werkstoffen. Besonders für Keramikschichten geeignet, aber nicht darauf beschränkt, ist eine Keramik mit einem Gemisch oder einer Zusammensetzung aus zwei oder mehreren der genannten Oxidkeramiken, vorzugsweise aus Aluminiumoxid und/oder Chromoxid mit einem Anteil an Titandioxid zur Stabilisierung, vorzugsweise einer Zusammensetzung mit einem Anteil an Aluminiumoxid zwischen 60 % und 97 % (Gewichtsprozenten) und einem Anteil an Titandioxid zwischen 3 % und 40 % oder einen Anteil an Chromoxid in einem Bereich von 40 % bis 60 % und einem Anteil an Titandioxid in einem Bereich von 40 % bis 60 %.

Es sind aber auch nichtoxidische Keramiken verwendbar, insbesondere Carbide, z.B. Siliciumcarbid, oder Nitride, oder auch silicathaltige Keramiken, insbesondere Porzellan und/oder mit einer Glasur.

Das zweite Kupplungselement und/oder dritte Kupplungselement kann aus Kunststoff und/oder als Spritzgussteil ausgebildet sein, jedoch auch aus keramischem Material, insbesondere mit ähnlichen Spezifikationen wie anhand des ersten Kupplungselements beschrieben.

Insbesondere ist das zweite Kupplungselement als eine Luer-Push-Buchse oder ein Luer-Push-Stecker ausgebildet und das erste Kupplungselement als Luer-Push-Stecker bzw. Luer-Push-Buchse.

Die Verbindung von erstem Kupplungselement einerseits und zweitem oder drittem Kupplungselement andererseits ist in einer vorteilhaften Ausführungsform eine Steckverbindung, kann aber auch eine Schraubverbindung sein.

Erfindungsgemäß ist weiterhin die Verwendung der oben beschriebenen Kupplungsvorrichtung innerhalb einer medizintechnischen Vorrichtung vorgesehen, vorzugsweise für ein chirurgisches System. Zahlreiche Operationen werden mit Laserlicht durchgeführt. Dabei werden auch schwer zugängliche Stellen im Körper mit Laserlicht behandelt. Weiterhin kann die obige Kupplungsvorrichtung auch für ein endoskopisches System verwendet werden. Außerdem kann die obige Kupplungsvorrichtung in einem System verwendet werden, das für operative Eingriffe am menschlichen oder tierischen Auge vorgesehen ist, insbesondere für operative Eingriffe an der Linse, beispielsweise zur Behandlung des grauen Stars (Katarakts) oder für operative Eingriffe an der Hornhaut (cornea) zur Korrektur von Fehlsichtigkeit vorgesehen ist.

In einer besonders vorteilhaften Ausführungsform verbindet die Kupplungsvorrichtung einen Laser mit einem Handinstrument. Insbesondere weist ein Lasersystem zur Laserlichtapplikation am menschlichen oder tierischen Körper, insbesondere Auge, einen Laser und ein Handinstrument und wenigstens einen Lichtleiter auf sowie wenigstens eine Kupplungsvorrichtung für den Lichtleiter zum Übertragen des Laserlichts des Laser zum Handinstrument.

Bevorzugte Ausführungsformen der erfindungsgemäßen Kupplungsvorrichtung werden nachstehend unter Bezugnahme auf die beigefügten Zeichnungen näher erläutert. Es zeigen:

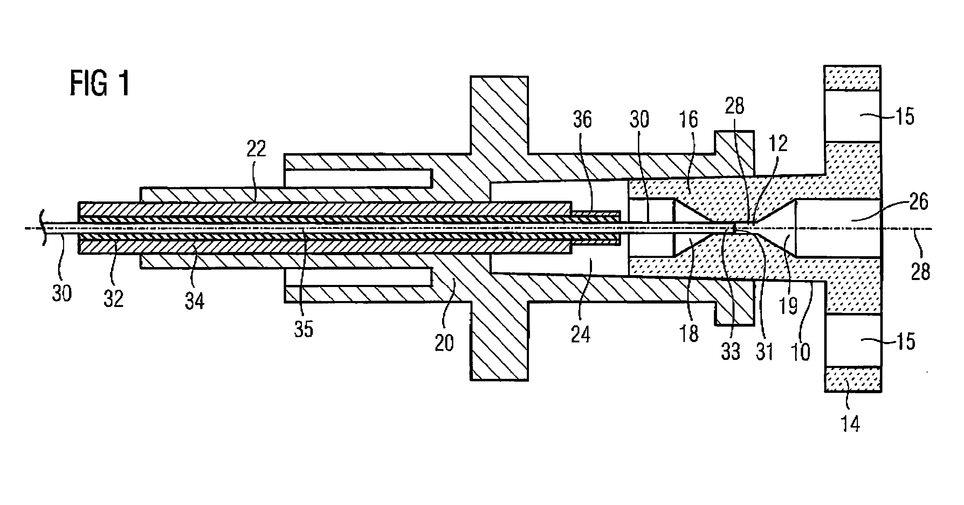

- FIG 1: eine Schnittansicht einer bevorzugten Ausführungsform der Kupplungsvorrichtung,
- FIG 1: eine Schnittansicht einer weiteren bevorzugten Ausführungsform der Kupplungsvorrichtung,
- FIG 3: eine Darstellung eines ersten Verfahrensschrittes des Zusammenbaus eines Kupplungselements,
- FIG 4: eine Darstellung eines zweiten Verfahrensschrittes des Zusammenbaus des Kupplungselements,
- FIG 5: eine Darstellung eines dritten Verfahrensschrittes des Zusammenbaus des Kupplungselements, und
- FIG 6: eine Darstellung eines vierten Verfahrensschrittes des Zusammenbaus des Kupplungselements.

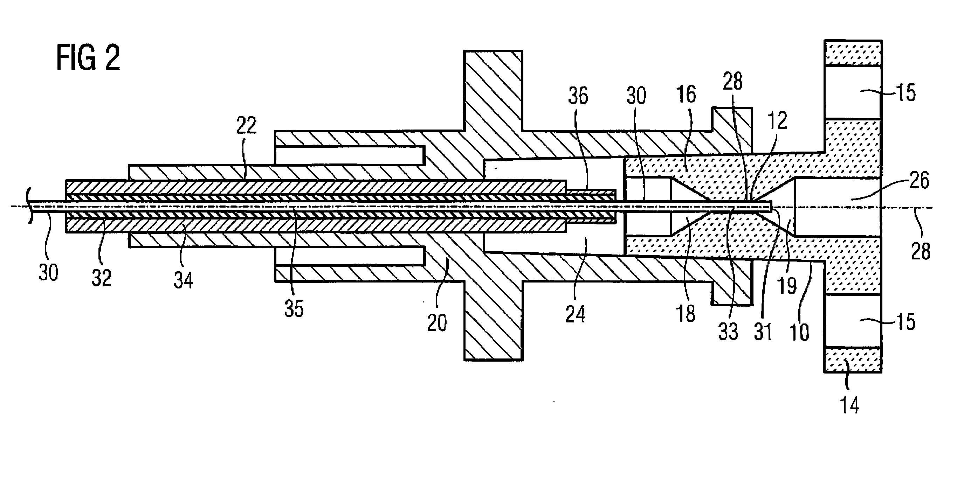

In FIG 1 und 2 ist eine bevorzugte Ausführungsform der Kupplungsvorrichtung dargestellt. Die Kupplungsvorrichtung umfasst ein erstes Kupplungselement 10 und ein zweites Kupplungselement 20. In dieser konkreten Ausführungsform ist das erste Kupplungselement als ein Stecker 10 und das zweite Kupplungselement als eine Buchse 20 ausgebildet. Der Stecker 10 und die Buchse 20 sind zusammensteckbar. In FIG 1 befinden sich der Stecker 10 und die Buchse 20 im zusammengesteckten Zustand.

Allgemein können bei der Kupplungsvorrichtung gemäß der Erfindung die Kupplungselemente 10 und 20 als Formteile ausgebildet sein, die lösbar zusammenfügbar, insbesondere zusammensteckbar oder zusammenschraubbar, sind.

In der dargestellten Ausführungsform ist die Buchse 20 als handelsübliche Luer-Push-Buchse ausgebildet. Weiterhin ist die Buchse 20 einstückig und als Spritzgussteil ausgebildet. Der Stecker 10 hat die Form eines handelsüblichen Luer-Push-Steckers.

Das erste Kupplungselement 10 ist ganz oder zumindest im Bereich des ersten Durchgangs 12 aus einem keramischen Material hergestellt. Das keramische Material umfasst insbesondere eine Oxidkeramik, vorzugsweise Aluminiumoxid (Al₂O₃), mit dem das Teil kostengünstig, insbesondere durch Formen und Brennen ohne weitere Nachbearbeitung, mit einer glatten Oberfläche herstellbar ist.

Der Stecker 10 weist ein Basisteil 14 auf, das nach Art eines Flansches ausgebildet ist. In dem Basisteil 14 befinden sich Bohrungen 15, die eine Befestigung des Basisteils 14 an einem Gerät oder dergleichen ermöglichen. Von dem Basisteil 14 aus erstreckt sich ein länglicher Fortsatz 16, der konusförmig ausgebildet ist. Der Winkel des Konus am Fortsatz 16 beträgt bei dieser konkreten Ausführungsform 1,5°.

Der Stecker 10 weist einen langgestreckten ersten Durchgang 12 auf, der den Fortsatz 16 und das Basisteil 14 durchdringt. Dabei sind die Längsachsen des Fortsatzes 16 und des ersten Durchgangs 12 koaxial zueinander ausgebildet. Außerdem sind der Fortsatz 16 und der erste Durchgang 12 konzentrisch zueinander angeordnet.

Der erste Durchgang 12 umfasst einen trichterförmigen Abschnitt 18, der sich im Fortsatz 16 befindet und sich zum Basisteil 14 hin verjüngt und insbesondere konisch ausgebildet ist.

Im Bereich des Basisteils 14 weist der erste Durchgang 12 eine Verbreiterung 26 auf. Die Verbreiterung 26 ist insbesondere zur Aufnahme eines optischen Bauelementes oder eines weiteren Lichtleiters vorgesehen. Bei dem optischen Bauelement kann es sich sowohl um ein lichtemittierendes als auch um ein lichtempfindliches Bauelement als auch ein lichtapplizierendes Bauteil, beispielsweise ein Handinstrument für chirurgische oder therapeutische Eingriffe, insbesondere am Auge, handeln.

In der dargestellten Ausführungsform ist der Stecker 10 einstückig ausgebildet. Bei einer alternativen Ausführungsform kann der Stecker 10 auch mehrteilig ausgebildet sein, wobei zumindest das Teil, das den trichterförmigen Abschnitt 18 umfasst, aus dem keramischen Material hergestellt ist. Außerdem ist es auch möglich, nur die Innenfläche mit Keramik zu beschichten.

Die Buchse 20 weist eine Ausnehmung 24 auf, die komplementär zu dem Fortsatz 16 ausgebildet ist. Der Durchmesser der Ausnehmung 24 verjüngt sich mit zunehmendem Abstand von dem Stecker 10. Der Winkel des Konus der Ausnehmung 24 beträgt ebenfalls 1,5°.

Die Buchse 20 weist einen zweiten Durchgang 22 auf, der im zusammengefügten Zustand mit dem ersten Durchgang 12 des Steckers 10 eine gemeinsame Längsmittelachse A aufweist. Der Durchgang 22 weist einen kreisförmigen Querschnitt auf.

In dem Durchgang befindet sich ein erster Rohrabschnitt 32 und ein zweiter Rohrabschnitt 34. Der Außendurchmesser des zweiten Rohrabschnitts 34 entspricht etwa dem Innendurchmesser des zweiten Durchgangs 22. Der Au-βendurchmesser des ersten Rohrabschnitts 32 entspricht etwa dem Innendurchmesser des zweiten Rohrabschnitts 34. Der zweite Rohrabschnitt 34 ist im zweiten Durchgang 22 angeordnet. Der zweite Rohrabschnitt 34 ist geringfügig länger als der zweite Durchgang 22. Der erste Rohrabschnitt 32 ist im zweiten Rohrabschnitt 34 angeordnet.

In dem ersten Rohrabschnitt 32 befindet sich ein Abschnitt eines langgestreckten, vorzugsweise als einstückige optische Faser oder Glasfaser ausgebildeten, Lichtleiters 30 mit einem freien Ende 31. Der erste Rohrabschnitt 32 bewirkt eine Stabilisierung des Lichtleiters 30. Weiterhin steht der Endbereich des Lichtleiters 30 mit seinem freien Ende 31 aus dem ersten Rohrabschnitt 32 hervor. Der Innendurchmesser des ersten Rohrabschnitts 32 sowie auch des zentralen Abschnitts 28 des ersten Durchgangs 12 entspricht in etwa dem Außendurchmesser des Lichtleiters 30.

Der Lichtleiter 30 endet in FIG 1 mit seinem freien Ende 31 in einem zentralen Bereich oder Abschnitt 28 des ersten Durchgangs 12, vorzugsweise etwa in der Mitte. Diese Ausführungsform gemäß FIG 1 ist besonders zum Anschließen eines weiteren Lichtleiters, der von der anderen Seite in den zentralen Abschnitt 28 eingeführt wird, geeignet.

In FIG 2 ist der Lichtleiter 30 durch den gesamten zentralen Abschnitt 28 des ersten Durchgangs 12 geführt und das freie Ende 31 des Lichtleiters 30 ragt in die Verbreiterung 26.

Der trichterförmige Abschnitt 18 bewirkt, dass beim Zusammenfügen des ersten Kupplungselements 10 und des zweiten Kupplungselements 20 der Endabschnitt des Lichtleiters 30 mit dem freien Ende 31 sicher in den zentralen Bereich des ersten Durchgangs 12 eingeführt oder zentriert wird. Das keramische Material hat eine besonders glatte Oberfläche auf der Innenseite des trichterförmigen Abschnitts 18, so dass die Gefahr einer Beschädigung des Lichtleiters 30 beim Zusammenfügen des ersten Kupplungselements 10 und des zweiten Kupplungselements 20 gering ist.

Ein entsprechender trichterförmiger Abschnitt 19, der in den zentralen Abschnitt 28 an der vom trichterförmigen Abschnitt 18 abgewandten Seite mündet, kann das Einführen des weiteren Lichtleiters, insbesondere gemäß FIG 1, erleichtern.

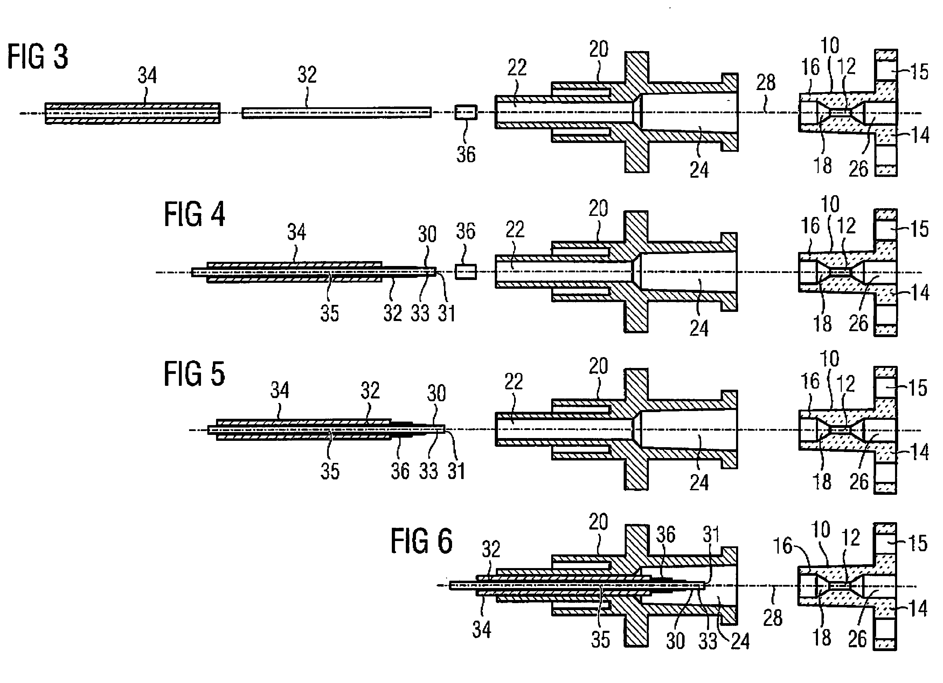

In FIG 3 bis FIG 6 ist dargestellt, wie und in welcher Reihenfolge das zweite Kupplungselement 20, der erste Rohrabschnitt 32, der zweite Rohrabschnitt 34 und die Hülse 36 zusammengefügt werden.

In FIG 3 sind der zweite Rohrabschnitt 34, der erste Rohrabschnitt 32, die Hülse 36, das zweite Kupplungselement 20 und das erste Kupplungselement 10 als Einzelteile dargestellt und so ausgerichtet wie in FIG 1.

In FIG 4 ist der erste Rohrabschnitt 32 in den zweiten Rohrabschnitt 34 eingeführt, wobei an der dem ersten Kupplungselement 10 abgewandten Seite der erste Rohrabschnitt 32 mit dem zweiten Rohrabschnitt 34 bündig ist.

In FIG 5 ist auf den ersten Rohrabschnitt 32 die Hülse 36 übergestülpt, wobei die Hülse 36 an den zweiten Rohrabschnitt 34 unmittelbar anschließt. Durch die Hülse 36 werden der erste Rohrabschnitt 32 und der zweite Rohrabschnitt 34 gegenseitig fixiert.

In FIG 6 sind der erste Rohrabschnitt 32, die Hülse 36 und der zweite Rohrabschnitt 34, die zu einem Teil zusammengefügt sind, in das zweite Kupplungselement 20 eingeführt. Dabei befindet sich das dem ersten Kupplungselement 10 zugewandte Ende des ersten Rohrabschnitts 32 noch innerhalb der Ausnehmung 24.

Die Rohrabschnitte 32 und 34 können auch entfallen, wenn der Lichtleiter 30 direkt in dem zweiten Durchgang 22 fixiert wird, beispielsweise mittels Kleber oder kraftschlüssig.

Die erfindungsgemäße Kupplungsvorrichtung ist für medizintechnische Anwendungen geeignet, insbesondere für endoskopische und chirurgische Systeme und Vorrichtungen. Die Kupplungsvorrichtung kann für Geräte und Systeme vorgesehen sein, die bei einer Augenoperation verwendet werden. Solche Geräte werden beispielsweise bei der Operation des Grauen Stars zum Entfernen der alten Augenlinsen verwendet, wenn anschließend künstliche Linsen eingepflanzt werden. Auch für Hornhautoperationen werden solche Geräte verwendet, um Fehlsichtigkeit zu korrigieren.

Bei medizinischen Anwendungen sind die hygienischen Bedingungen besonders wichtig. Aus diesem Grund ist die erfindungsgemäße Kupplungsvorrichtung beispielsweise als Einwegartikel vorgehen. Alternativ oder zusätzlich ist die erfindungsgemäße Kupplungsvorrichtung sterilisierbar.

Der Lichtleiter 30 ist insbesondere für die Übertragung von sichtbarem Licht und Infrarotlicht, insbesondere kohärentem Licht, d.h. Licht mit konstanter

Phasenbeziehung, vorgesehen. Vorzugsweise wird das Licht für den Lichtleiter 30 von einem Laser, beispielsweise einem CO₂-Laser oder Dioden-Laser oder einem Neodym-YAG-Laser, erzeugt.

### Bezugszeichenliste

- 10: erstes Kupplungselement, Stecker
- 12: erster Durchgang
- 14: Basisteil
- 15: Bohrung
- 16: Fortsatz
- 18: trichterförmiger Abschnitt
- 19: Abschnitt
- 20: zweites Kupplungselement, Buchse
- 22: zweiter Durchgang
- 24: Ausnehmung
- 26: Verbreiterung
- 28: Abschnitt
- 30: Lichtleiter
- 31: freies Ende
- 32: erster Rohrabschnitt
- 33: Endabschnitt
- 34: zweiter Rohrabschnitt
- 35: Zwischenabschnitt
- 36: Hülse
- A: Längsmittelachse

## Patentansprüche

1. Lasersystem zur Laserlichtapplikation am menschlichen oder tierischen Körper, insbesondere Auge, mit einem Laser und einem Handinstrument und mit wenigstens einem Lichtleiter, der als einstückige optische Faser ausgebildet ist, und mit wenigstens einer Kupplungsvorrichtung zum Anschließen des Lichtleiters und zum Übertragen des Laserlichts des Lasers zum Handinstrument,
wobei die Kupplungsvorrichtung Folgendes umfasst:
a) ein erstes Kupplungselement (10) mit einem ersten Durchgang (12) zum Aufnehmen eines freien Endes (31) des Lichtleiters (30) und eines sich an das freie Ende (31) anschließenden Endabschnitts (33) des Lichtleiters (30) und
b) ein zweites Kupplungselement (20) mit einem zweiten Durchgang (22) zum Aufnehmen und/oder Fixieren eines auf den Endabschnitt (33) folgenden Zwischenabschnitts (35) des Lichtleiters (30),
wobei
c) das erste Kupplungselement (10) und das zweite Kupplungselement (20) lösbar zusammenfügbar oder in einem gekuppelten Zustand lösbar zusammengefügt sind,
d) der erste Durchgang (12) und der zweite Durchgang (22) im gekuppelten Zustand einen gemeinsamen Durchgang bilden und/oder eine gemeinsame Längsachse (A) aufweisen oder umschließen,
e) der erste Durchgang (12) einen trichterförmigen Abschnitt (18) aufweist, der im gekuppelten Zustand dem zweiten Durchgangs zugewandt ist und sich zum zweiten Durchgang (22) hin verbreitert,
f) das erste Kupplungselement (10) zumindest im Bereich des trichterförmigen Abschnitts (18) wenigstens an dessen Innenfläche aus keramischem Material gebildet oder hergestellt ist,
g) der erste Durchgang (12) des ersten Kupplungselements (10) einen an den trichterförmigen Abschnitt (18) sich anschließenden zweiten Abschnitt (28) aufweist, der im gekuppelten Zustand an der vom zweiten Durchgang (22) abgewandten Seite des trichterförmigen Abschnitts (18) angeordnet ist,
h) der zweite Abschnitt (28) des ersten Durchgangs im gekuppelten Zustand das freie Ende und einen unmittelbar anschließenden ersten Teil des Endabschnitts des Lichtleiters (30) aufnimmt und derart justiert, dass eine optische Achse des Lichtleiters an dessen freiem Ende (31) im Wesentlichen entlang einer Längsachse dieses zweiten Abschnitts ausgerichtet ist,
i) der zweite Abschnitt (28) des ersten Durchgangs einen im Wesentlichen konstanten Innendurchmesser aufweist und der Lichtleiter zumindest im Endabschnitt einen im Wesentlichen konstanten Außendurchmesser aufweist und bei der der Innendurchmesser des zweiten Abschnitts des ersten Durchgangs an den Außendurchmesser des Lichtleiters angepasst ist,
j) wobei die Oberflächenrauhigkeit der Innenfläche des ersten Durchgangs zumindest im trichterförmigen Abschnitt (18) höchstens ein fünfzigstel der Querschnittsabmessung des Lichtleiters beträgt,
k) wobei, wenn der Endbereich des Lichtleiters auf die innere Oberfläche des trichterförmigen Abschnitts trifft, der Lichtleiter nun entlang dieser inneren Oberfläche gleiten kann, ohne an einer Vertiefung oder Erhebung an der Oberfläche hängen zu bleiben, und der trichterförmige Abschnitt des ersten Durchganges zur Zentrierung des Lichtleiterendes beim Einführen in den ersten Durchgang des ersten Kupplungselements vorgesehen ist und
l) wobei der Lichtleiter (30) durch den gesamten zweiten Abschnitt (28) des ersten Durchganges (12) geführt ist und das freie Ende (31) des Lichtleiters (30) aus dem zweiten Abschnitt (28) herausragt.

2. Lasersystem nach Anspruch 1, wobei die Kupplungsvorrichtung zum Anschließen des Lichtleiters an wenigstens einen weiteren Lichtleiter und/oder an wenigstens ein optisches Bauelement, insbesondere ein lichtemittierendes Bauelement, oder ein lichtdetektierendes Bauelement oder ein lichtapplizierendes Instrument, ausgebildet ist, wobei der weitere Lichtleiter und/oder das optische Bauelement an den oder in dem ersten Durchgang des ersten Kupplungselements anschließbar oder angeschlossen sind oder ist, wobei vorzugsweise der weitere Lichtleiter und/oder das optische Bauelement an oder in den zweiten Abschnitt des ersten Durchgangs an oder vom trichterförmigen Abschnitt abgewandten Seite anschließbar oder angeschlossen ist und wobei vorzugsweise der weitere Lichtleiter im angeschlossenen Zustand mit seinem freien Ende und einem anschließenden Endabschnitts in dem zweiten Abschnitt des ersten Durchganges aufgenommen ist und derart justiert ist, dass eine optische Achse des Lichtleiters an dessen freiem Ende im Wesentlichen entlang einer Längsachse dieses zweiten Abschnitts ausgerichtet ist und die freien Enden der beiden Lichtleiter einander gegenüber liegen.

3. Lagersystem nach Anspruch 1 oder Anspruch 2, bei der der erste Durchgang einen dritten Abschnitt aufweist, der sich trichterförmig von dem zweiten Abschnitt weg aüfweiter.

4. Lasersystem nach einem der Ansprüche 1 bis 3 mit wenigstens einem dritten Kupplungselement zur Aufnahme des weiteren Lichtleiters und/oder des wenigstens einen optischen Bauelements, wobei das dritte Kupplungselement mit dem ersten Kupplungselement lösbar zusammenfügbar oder in einem gekuppelten Zustand lösbar zusammengefügt ist, wobei vorzugsweise das dritte Kupplungselement einen dritten Durchgang aufweist zur Aufnahme und/oder Fixierung eines auf den Endabschnitt folgenden Zwischenabschnitts des weiteren Lichtleiters und wobei vorzugsweise der erste Durchgang (12) des ersten Kupplungselements und der dritte Durchgang des dritten Kupplungselements im gekuppelten Zustand einen gemeinsamen Durchgang bilden und/oder eine gemeinsame Längsachse (A) aufweisen oder umschließen.

5. Lasersystem nach einem der vorhergehenden Ansprüche, bei der das erste Kupplungselement (10) einstückig oder einteilig ausgebildet ist und/oder bei der das erste Kupplungselement vollständig aus keramischem Material, insbesondere demselben keramischen Material, hergestellt oder gebildet ist.

6. Lasersystem nach einem der Ansprüche 1 bis 5, bei der das erste Kupplungselement (10) zwei oder mehrere vorgefertigte und aneinander oder miteinander befestigte Teile umfasst, wobei zumindest ein Teil mit dem trichterförmigen Abschnitt (14, 19) des ersten Durchgangs zumindest an dessen Innenfläche aus dem keramischen Material hergestellt oder gebildet ist.

7. Lasersystem nach einem der vorhergehenden Ansprüche, bei der das keramische Material wenigstens einen oxidkeramischen Werkstoff umfasst, wobei der oxidkeramische Werkstoff insbesondere Aluminiumoxid und/oder Titandioxid und/oder Chromoxid und/oder Magnesiumoxid und/oder Berylliumoxid und/oder Zirkondioxid umfasst.

8. Lasersystem nach Anspruch 7, bei der der oxidkeramische Werkstoff einen Anteil an Aluminiumoxid in einem Bereich von 60 % bis 97 % und einen Anteil an Titandioxid in einem Bereich von 3 % bis 40 % aufweist oder bei der der oxidkeramische Werkstoff einen Anteil an Chromoxid in einem Bereich von 40 % bis 60 % und einen Anteil an Titandioxid in einem Bereich von 40 % bis 60 % aufweist.

9. Lasersystem nach einem der vorhergehenden Ansprüche, bei der das erste Kupplungselement oder ein den ersten Durchgang oder zumindest den trichterförmigen Abschnitt des ersten Durchgangs aufweisendes Teil des ersten Kupplungselements aus einem urgeformten Formkörper der Keramik gebildet ist, wobei insbesondere die Innenfläche des ersten Durchgangs zumindest im trichterförmigen Abschnitt nachbearbeitet, insbesondere nachpoliert, ist.

10. Lasersystem nach einem der vorhergehenden Ansprüche, bei der das erste Kupplungselement oder ein den ersten Durchgang oder zumindest den trichterförmigen Abschnitt des ersten Durchgangs aufweisendes Teil des ersten Kupplungselements aus einem Grundkörper und mit einer Oberflächenschicht aus dem keramischen Material gebildet ist, wobei insbesondere der Grundkörper aus einem Metall, insbesondere Aluminum oder einer Aluminiumlegierung oder einem Stahl, gebildet ist und/oder wobei insbesondere zwischen Grundkörper und Oberflächenschicht aus keramischem Material eine Zwischenschicht, insbesondere zur Haftvermittlung und/oder eine Chrom-Nickel-Schicht, angeordnet ist und/oder wobei insbesondere die Oberflächenschicht aus keramischem Material auf den Grundkörper oder die Zwischenschicht aufgespritzt ist, insbesondere durch thermisches Spritzen oder Plasmaspritzen.

11. Lasersystem nach einem der vorhergehenden Ansprüche, bei der j) die Oberflächenrauhigkeit der Innenfläche des ersten Durchgangs zumindest im trichterförmigen Abschnitt (18) höchstens ein hundertstel der Querschnittsabmessung des Lichtleiters beträgt und/oder bei der die Innenfläche des ersten Durchgangs zumindest im trichterförmigen Abschnitt eine Oberflächenrauhigkeit von höchstens 3 µm oder 2,5 µm oder 2 µm oder 1,5 µm oder 1 µm oder 0,5 µm aufweist.

12. Lasersystem nach einem der vorhergehenden Ansprüche, bei der das zweite Kupplungselement (20) aus Kunststoff und/oder als Spritzgussteil ausgebildet ist oderbei der das zweite Kupplungselement (20) aus dem keramischen Material hergestellt ist.

13. Lasersystem nach einem der vorhergehenden Ansprüche, bei der das zweite Kupplungselement (20) als eine Luer-Push-Buchse oder ein Luet-Push-Stecker ausgebildet ist und bei der vorzugsweise das erste (10) Kupplungselement die Form eines Luet-Push-Steckers bzw. einer Luer-Push-Buchse aufweist.

14. Lasersystem nach einem der vorhergehenden Ansprüche, bei der das erste (10) und zweite (20) und/oder ein drittes oder das dritte Kupplungselement durch Zusammenstecken zusammenfügbar oder zusammengefügt sind und/oder bei der das erste (10) und zweite (20) und/oder ein drittes oder das dritte Kupplungselement mittels wenigstens eines Befestigungselements zusammenfügbar sind und/oder bei der das erste (10) und zweite (20) und/oder ein drittes oder das dritte Kupplungselement mittels wenigstens einer Schraubverbindung zusammenfügbar sind.

15. Lasersystem nach einem der vorhergehenden Ansprüche, bei der der Lichtleiterdurchmesser im Bereich von 100 µm bis 1000 µm, vorzugsweise 200 µm bis 800 µm, liegt.

16. Lasersystem nach einem der vorhergehenden Ansprüche, das als chirurgisches System oder endoskopisches System oder als System, das für operative Eingriffe am Auge, vorzugsweise für operative Eingriffe an der Linse, insbesondere zur Behandlung eines Katarakts, oder für operative Eingriffe an der Hornhaut zur Korrektur von Fehlsichtigkeit, vorgesehen ist.

## Claims

1. Laser system for laser light application in the human or animal body, in particular the eye, with a laser and a manual instrument and with at least one light guide which is formed as an integral optical fibre, and with at least one coupling device for connecting the light guide and for transmitting the laser light of the laser to the manual instrument, wherein the coupling device comprises the following:
a) a first coupling element (10) with a first passage (12) for receiving a free end (31) of the light guide (30) and an end portion (33), which adjoins the free end (31), of the light guide (30) and
b) a second coupling element (20) with a second passage (22) for receiving and/or fixing an intermediate portion (35), which follows the end portion (33), of the light guide (30),
wherein
c) the first coupling element (10) and the second coupling element (20) can be detachably joined or, in a coupled state, are detachably joined,
d) the first passage (12) and the second passage (22), in the coupled state, form a joint passage and/or have or enclose a joint longitudinal axis (A),
e) the first passage (12) has a funnel-shaped portion (18) which, in the coupled state, faces the second passage and widens towards the second passage (22),
f) the first coupling element (10) at least in the region of the funnel-shaped portion (18) at least on its inner surface is formed or produced from ceramic material,
g) the first passage (12) of the first coupling element (10) has a second portion (28) which adjoins the funnel-shaped portion (18), which second portion (28), in the coupled state, is arranged on the side of the funnel-shaped portion (18) facing away from the second passage (22),
h) the second portion (28) of the first passage, in the coupled state, receives the free end and a directly adjoining first part of the end portion of the light guide (30) and is adjusted such that an optical axis of the light guide at its free end (31) is aligned substantially along a longitudinal axis of this second portion,
i) the second portion (28) of the first passage has a substantially constant inner diameter and the light guide has at least in the end portion a substantially constant outer diameter and in the case of which the inner diameter of the second portion of the first passage is adapted to the outer diameter of the light guide,
j) wherein the surface roughness of the inner surface of the first passage at least in the funnel-shaped portion (18) is at most a fiftieth of the cross-sectional dimensions of the light guide,
k) wherein, if the end region of the light guide hits against the inner surface of the funnel-shaped portion, the light guide can thus slide along this inner surface without sticking on a recess or elevation on the surface, and the funnel-shaped portion of the first passage is intended for centring the light guide end during introduction into the first passage of the first coupling element and
l) wherein the light guide (30) is guided through the entire second portion (28) of the first passage (12) and the free end (31) of the light guide (30) protrudes out of the second portion (28).

2. Laser system according to Claim 1, wherein the coupling device is formed for connection of the light guide to at least one further light guide and/or to at least one optical component, in particular a light-emitting component or a light-detecting component or a light-applying instrument, wherein the further light guide and/or the optical component are/is connectable or connected to the or in the first passage of the first coupling element, wherein preferably the further light guide and/or the optical component are/is connectable or connected to or in the second portion of the first passage on the side facing away from the funnel-shaped portion and wherein preferably the further light guide, in the connected state, is received with its free end and an adjoining end portion in the second portion of the first passage and is adjusted such that an optical axis of the light guide is aligned at its free end substantially along a longitudinal axis of this second portion and the free ends of the two light guides are opposite one another.

3. Laser system according to Claim 1 or Claim 2, in which the first passage has a third portion which widens in a funnel-shape away from the second portion.

4. Laser system according to one of Claims 1 to 3 with at least one third coupling element for receiving the further light guide and/or the at least one optical component, wherein the third coupling element can be detachably joined to the first coupling element or, in a coupled state, is detachably joined, wherein preferably the third coupling element has a third passage for receiving and/or fixing an intermediate portion, which follows the end portion, of the further light guide and wherein preferably the first passage (12) of the first coupling element and the third passage of the third coupling element, in the coupled state, form a joint passage and/or have or enclose a joint longitudinal axis (A).

5. Laser system according to one of the preceding claims, in which the first coupling element (10) is formed integrally or in one piece and/or in which the first coupling element is produced or formed entirely from ceramic material, in particular the same ceramic material.

6. Laser system according to one of Claims 1 to 5, in which the first coupling element (10) comprises two or more premanufactured parts which are fastened to one another, wherein at least one part with the funnel-shaped portion (14, 19) of the first passage is produced or formed at least on its inner surface from the ceramic material.

7. Laser system according to one of the preceding claims, in which the ceramic material comprises at least one oxide-ceramic material, wherein the oxide-ceramic material comprises in particular aluminium oxide and/or titanium dioxide and/or chromic oxide and/or magnesium oxide and/or beryllium oxide and/or zirconium dioxide.

8. Laser system according to Claim 7, in which the oxide-ceramic material has a ratio of aluminium oxide in a range from 60% to 97% and a ratio of titanium dioxide in a range from 3% to 40% or in which the oxide-ceramic material has a ratio of chromic oxide in a range from 40% to 60% and a ratio of titanium dioxide in a range from 40% to 60%.

9. Laser system according to one of the preceding claims, in which the first coupling element or a part, which has the first passage or at least the funnel-shaped portion of the first passage, of the first coupling element is formed from an originally shaped mould of ceramic, wherein in particular the inner surface of the first passage is finished, in particular re-polished at least in the funnel-shaped portion.

10. Laser system according to one of the preceding claims, in which the first coupling element or a part, which has the first passage or at least the funnel-shaped portion of the first passage, of the first coupling element is formed from a base body and with a surface layer from the ceramic material, wherein in particular the base body is formed from a metal, in particular aluminium or an aluminium alloy or a steel and/or wherein, in particular between base body and surface layer made of ceramic material, an intermediate layer, in particular for providing adhesion and/or a chromium-nickel layer, is arranged and/or wherein in particular the surface layer made of ceramic material is sprayed onto the base body or the intermediate layer, in particular by thermal spraying or plasma spraying.

11. Laser system according to one of the preceding claims, in which j) the surface roughness of the inner surface of the first passage is at least in the funnel-shaped portion (18) at most a hundredth of the cross-sectional dimensions of the light guide and/or in which the inner surface of the first passage at least in the funnel-shaped portion has a surface roughness of at most 3 µm or 2.5 µm or 2 µm or 1.5 µm or 1 µm or 0.5 µm.

12. Laser system according to one of the preceding claims, in which the second coupling element (20) is formed from plastic and/or as an injection moulded part or in which the second coupling element (20) is produced from the ceramic material.

13. Laser system according to one of the preceding claims, in which the second coupling element (20) is formed as a Luer push socket or a Luer push male connector and in which preferably the first (10) coupling element has the form of a Luer push male connector or a Luer push socket.

14. Laser system according to one of the preceding claims, in which the first (10) and second (20) and/or a third or the third coupling element can be joined or are joined by plugging together and/or in which the first (10) and second (20) and/or a third or the third coupling element can be joined by means of at least one fastening element and/or in which the first (10) and second (20) and/or a third or the third coupling element can be joined by means of at least one screw connection.

15. Laser system according to one of the preceding claims, in which the light guide diameter lies in the range from 100 µm to 1000 µm, preferably 200 µm to 800 µm.

16. Laser system according to one of the preceding claims, which is intended as a surgical system or endoscopic system or as a system which is intended for operative intervention in the eye, preferably for operative intervention at the lens, in particular for the treatment of a cataract, or for operative intervention at the cornea in order to correct defective vision.

## Revendications

1. Système laser pour l'application de la lumière laser au corps humain ou animal, en particulier à l'oeil, avec un laser et un instrument à main et avec au moins un conducteur de lumière, qui est réalisé sous forme de fibre optique en une pièce, et avec au moins un dispositif de couplage pour la connection du conducteur de lumière et pour la transmission de la lumière du laser à l'instrument à main,
où le dispositif de couplage comprend ce qui suit:
a) un premier élément de couplage (10) avec un premier passage (12) pour la réception d'une extrémité libre (31) du conducteur de lumière (30) et une section d'extrémité (33) du conducteur de lumière (30) faisant suite à l'extrémité libre (31), et
b) un deuxième élément de couplage (20) avec un deuxième passage (22) pour la réception et/ou la fixation d'une section intermédiaire (35) du conducteur de lumière (30) faisant suite à la section d'extrémité (33), où
c) le premier élément de couplage (10) et le deuxième élément de couplage (20) peuvent être assemblés amoviblement ou sont assemblés amoviblement dans un état couplé,
d) le premier passage (12) et le deuxième passage (22), à l'état couplé, forment un passage commun et/ou présentent ou entourent un axe longitudinal commun (A),
e) le premier passage (12) présente une section en forme d'entonnoir (18) qui, à l'état couplé, est orientée vers le deuxième passage et s'élargit vers le deuxième passage (22),
f) le premier élément de couplage (10), au moins dans la zone de la section en forme d'entonnoir (18), est réalisé ou fabriqué au moins à sa surface intérieure en un matériau céramique,
g) le premier passage (12) du premier élément de couplage (10) présente une deuxième section (28) faisant suite à la section en forme d'entonnoir (18) qui, à l'état couplé, est disposée au côté de la section en forme d'entonnoir éloignée du deuxième passage (22),
h) la deuxième section (28) du premier passage, à l'état couplé, reçoit et ajuste l'extrémité libre et une première partie faisant directement suite de la section d'extrémité du conducteur de lumière (30) de façon qu'un axe optique du conducteur de lumière, à son extrémité libre (31), soit orienté sensiblement le long d'un axe longitudinal de cette deuxième section,
i) la deuxième section (28) du premier passage présente un diamètre intérieur sensiblement constant, et le conducteur de lumière, au moins dans la section d'extrémité, présente un diamètre extérieur sensiblement constant, et où le diamètre intérieur de la deuxième section du premier passage est adapté au diamètre extérieur du conducteur de lumière,
j) où la rugosité de surface de la face intérieure du premier passage, au moins dans la section en forme d'entonnoir (18), représente au maximum un cinquantième de la dimension en section transversale du conducteur de lumière,
k) où, lorsque la zone d'extrémité du conducteur de lumière est incidente sur la surface intérieure de la section en forme d'entonnoir, le conducteur de lumière peut glisser maintenant le long de cette surface intérieure sans rester accroché à un creux ou une surélévation à la surface, et la section en forme d'entonnoir du premier passage est prévue pour le centrage de l'extrémité du conducteur de lumière lors de l'insertion dans le premier passage du premier élément de couplage, et
l) où le conducteur de lumière (30) est guidé à travers toute la deuxième section (28) du premier passage (12), et l'extrémité libre (31) du conducteur de lumière (30) fait saillie de la deuxième section (28).

2. Système laser selon la revendication 1, où le dispositif de couplage est réalisé pour la connection du conducteur de lumière à au moins un autre conducteur de lumière et/ou à au moins un composant optique, en particulier un composant émetteur de lumière ou un composant détecteur de lumière ou un instrument d'application de lumière, où l'autre conducteur de lumière et/ou le composant optique peut ou peuvent être connectés ou est ou sont connectés au ou dans le premier passage du premier élément de couplage, où de préférence l'autre conducteur de lumière et/ou le composant optique peut être ou est connecté à ou dans la deuxième section du premier passage au côté éloigné de la section en forme d'entonnoir, et où de préférence l'autre conducteur de lumière, à l'état connecté, est reçu avec son extrémité libre et une section d'extrémité faisant suite dans la deuxième section du premier passage et est ajusté de façon qu'un axe optique du conducteur de lumière à son extrémité libre est orienté sensiblement le long d'un axe longitudinal de cette deuxième section, et les extrémités libres des deux conducteurs de lumière se font face.

3. Système laser selon la revendication 1 ou la revendication 2, dans lequel le premier passage présente une troisième section qui s'élargit en forme d'entonnoir, depuis la deuxième section.

4. Système laser selon l'une des revendications 1 à 3, avec au moins un troisième élément de couplage pour la réception de l'autre conducteur de lumière et/ou d'au moins un composant optique précité, où le troisième élément de couplage est assemblé amoviblement avec le premier élément de couplage ou est assemblé relâchablement dans un état couplé, où de préférence, le troisième élément de couplage présente un troisième passage pour la réception et/ou la fixation d'une section intermédiaire, faisant suite à la section d'extrémité, de l'autre conducteur de lumière, et où de préférence le premier passage (12) du premier élément de couplage et le troisième passage du troisième élément de couplage, à l'état couplé, forment un passage commun et/ou présentent ou entourent un axe longitudinal commun (A).

5. Système laser selon l'une des revendications précédentes, dans lequel le premier élément de couplage (10) est réalisé en une pièce ou en une partie et/ou dans lequel le premier élément de couplage est fabriqué ou formé complètement en un matériau céramique, en particulier à partir du même matériau céramique.

6. Système laser selon l'une des revendications 1 à 5, dans lequel le premier élément de couplage (10) comprend deux parties préfabriquées ou plus et fixées l'une à l'autre ou l'une avec l'autre, où au moins une partie avec la section en forme d'entonnoir (14, 19) du premier passage est fabriqué ou formé au moins à sa face intérieure en matériau céramique.

7. Système laser selon l'une des revendications précédentes, dans lequel le matériau céramique comprend au moins un matériau en céramique oxyde, où le matériau en céramique oxyde comprend en particulier l'oxyde d'aluminium et/ou le dioxyde de titane et/ou l'oxyde de chrome et/ou l'oxyde de magnésium et/ou l'oxyde de béryllium et/ou l'oxyde de zirconium.

8. Système laser selon la revendication 7, dans lequel le matériau en céramique oxyde présente une partie en oxyde d'aluminium dans une plage de 60% à 97% et une partie en dioxyde de titane dans une plage de 3% à 40%, et où le matériau en céramique oxyde présente une partie en oxyde de chrome dans une plage de 40% à 60% et une partie en dioxyde de titane dans une plage de 40% à 60%.

9. Système laser selon l'une des revendications précédentes, dans lequel le premier élément de couplage ou une première partie du premier élément de couplage présentant le premier passage ou au moins la section en forme d'entonnoir du premier passage, du premier élément de couplage est réalisé en un moule de forme primaire de la céramique, où en particulier la face intérieure du premier passage, au moins dans la section en forme d'entonnoir, est post-traitée, en particulier post-polie.

10. Système laser selon l'une des revendications précédentes, dans lequel le premier élément de couplage ou une partie du premier élément de couplage présentant le premier passage ou au moins la section en forme d'entonnoir du premier passage, du premier élément de couplage est formé par un corps de base et avec une couche de surface en matériau céramique précité, où est formé en particulier le corps de base en un métal, en particulier en aluminium ou en un alliage d'aluminium ou un acier et/ou où en particulier entre le corps de base et la couche de surface en matériau céramique est disposée une couche intermédiaire, en particulier pour l'adhérence et/ou une couche de nickel chrome et/ou en particulier la couche de surface en matériau céramique est projetée sur le corps de base ou la couche intermédiaire, en particulier par projection thermique ou projection à plasma.

11. Système laser selon l'une des revendications précédentes, dans lequel j) la rugosité de surface de la face intérieure du premier passage représente au moins dans la section en forme d'entonnoir (18) au maximum un centième de la dimension en section transversale du conducteur de lumière et/ou dans lequel la face intérieure du premier passage, au moins dans la section en forme d'entonnoir, présente une rugosité de surface au maximum de 3µm ou 2,5µm ou 2µm ou 1,5µm ou 1µm ou 0,5µm.

12. Système laser selon l'une des revendications précédentes, dans lequel le deuxième élément de couplage (1) est réalisé en matériau synthétique et/ou en pièce moulée par injection ou bien où le deuxième élément de couplage (20) est réalisé en matériau céramique précité.

13. Système laser selon l'une des revendications précédentes, dans lequel le deuxième élément de couplage (20) est réalisé comme douille de poussée Luer ou prise de poussée Luer, et dans lequel de préférence, le premier élément de couplage (10) présente la forme d'une fiche de poussée Luer respectivement d'une douille de poussée Luer.

14. Système laser selon l'une des revendications précédentes, dans lequel le premier (10) et deuxième (20) et/ou un troisième ou le troisième élément de couplage peuvent ou sont assemblés par emboîtement et/ou dans lequel le premier (10) et le deuxième (20) et/ou un troisième ou le troisième élément de couplage peuvent être assemblés par au moins un élément de fixation et/ou dans lequel le premier (10) et le deuxième (20) et/ou un troisième élément de couplage peuvent être assemblés par au moins un vissage.

15. Système laser selon l'une des revendications précédentes, dans lequel le diamètre du conducteur de lumière est dans la plage de 100µm à 1000µm, de préférence de 200µm à 800µm.

16. Système laser selon l'une des revendications précédentes, qui est prévu comme système chirurgical ou système endoscopique ou comme système qui est prévu pour des interventions d'opération à l'oeil, de préférence pour des interventions d'opération à la lentille, en particulier pour le traitement d'une cataracte, ou pour des interventions d'opération à la cornée pour la correction de l'amétropie.
